(19) Europäisches Patentamt / European Patent Office / Office européen des brevets

(11) **EP 4 379 858 A1**

(12) **EUROPEAN PATENT APPLICATION**
published in accordance with Art. 153(4) EPC

(43) Date of publication:
**05.06.2024 Bulletin 2024/23**

(21) Application number: **22876715.8**

(22) Date of filing: **14.09.2022**

(51) International Patent Classification (IPC):
*H01M 4/36* (2006.01)     *H01M 4/587* (2010.01)
*H01M 4/62* (2006.01)     *H01M 4/133* (2010.01)
*C01B 32/21* (2017.01)     *H01M 10/0525* (2010.01)
*H01M 4/02* (2006.01)

(52) Cooperative Patent Classification (CPC):
**C01B 32/21; H01M 4/02; H01M 4/133; H01M 4/36;
H01M 4/587; H01M 4/62; H01M 10/0525;
Y02E 60/10**

(86) International application number:
**PCT/KR2022/013728**

(87) International publication number:
**WO 2023/054940 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.09.2021 KR 20210129159**

(71) Applicant: **LG Energy Solution, Ltd.
Seoul 07335 (KR)**

(72) Inventors:
• **KIM, Hyun Chul
Daejeon 34122 (KR)**
• **WOO, Sang Wook
Daejeon 34122 (KR)**

(74) Representative: **Hoffmann Eitle
Patent- und Rechtsanwälte PartmbB
Arabellastraße 30
81925 München (DE)**

(54) **NEGATIVE ACTIVE MATERIAL, METHOD FOR MANUFACTURING SAME, AND NEGATIVE ELECTRODE AND SECONDARY BATTERY COMPRISING SAME**

(57)     The present invention relates to a negative active material which comprises secondary particles, in which two or more primary particles are aggregated, wherein the primary particles include natural graphite particles and an amorphous carbon coating layer positioned on at least a part of the natural graphite particles, and has a pore volume, measured by a mercury porosimeter measurement method, of 0.06 mL/g to 0.15 mL/g.

EP 4 379 858 A1

**Description**

**TECHNICAL FIELD**

**Cross-reference to Related Applications**

This application claims the benefit of Korean Patent Application No. 10-2021-0129159, filed on September 29, 2021, in the Korean Intellectual Property Office, the disclosure of which is incorporated herein in its entirety by reference.

**Technical Field**

The present invention relates to a negative electrode active material, a method for preparing the same, and a negative electrode and a secondary battery which include the same.

**BACKGROUND ART**

Rising prices of energy sources due to fossil fuel depletion and ever-growing awareness of environmental pollution have driven eco-friendly alternative energy sources to be placed as a first priority for life in the future.
In particular, the demand for secondary batteries as an eco-friendly alternative energy source is sharply increasing as mobile device technology continues to develop and the demand for the mobile devices continues to increase.
On top of that, in recent years, growing concern over environmental issues has given rise to extensive research into electric vehicles (EV) and hybrid electric vehicles (HEV), which may replace vehicles powered by fossil fuels, such as gasoline vehicle and diesel vehicle, one of the main culprits for air pollution. Lithium secondary batteries having high energy density, high discharge voltage, and high output stability have been predominantly studied and applied as power sources for these electric vehicles (EV) and hybrid electric vehicles (HEV).
In the secondary batteries, lithium metal has been typically used as a negative electrode, but due to a battery short circuit caused by formation of dendrites and risk of explosion resulting therefrom, carbon-based active materials, which serve to reversibly intercalate and deintercalate lithium ions and maintain structural and electrical properties have emerged as a replacement.
Various types of carbon-based active materials, such as artificial graphite, natural graphite, and hard carbon, have been used as the carbon-based active materials, and, among these materials, a graphite-based active material, which may ensure life characteristics of lithium secondary batteries due to excellent reversibility, has been most widely used. Since the graphite-based active material has a low discharge voltage versus lithium of -0.2 V, a battery using the graphite-based active material may exhibit a high discharge voltage of 3.6 V, and thus, the graphite-based active material provides a number of benefits in regard to energy density of lithium batteries.
Among the carbon-based active materials, natural graphite, in particular, is known to provide benefits of higher degree of crystallinity and higher capacity than other carbon-based active materials such as artificial graphite. However, the natural graphite has a high degree of orientation and thus causes poor quick charging performance of lithium ions. In addition, the natural graphite is, in a way, softer than other carbon-based active materials to clog internal pores upon roll pressing for preparing a negative electrode, leading to degradation of quick charging performance.
Therefore, in applying the natural graphite to the negative electrode, there remains a need to develop natural graphite having improved quick charging performance.
Japanese Patent No. 4403327 discloses graphite powder for a negative electrode of a lithium ion secondary battery, but does not provide an alternative to the above-described tasks.

[Related Art Document]

[Patent Document]

Japanese Patent No. 4403327

**DISCLOSURE OF THE INVENTION**

**TECHNICAL PROBLEM**

An aspect of the present invention provides a negative electrode active material having excellent quick charging performance, preventing swelling, and having excellent high temperature lifespan performance.
Another aspect of the present invention provides a method for preparing the negative electrode active material described above.

Another aspect of the present invention provides a negative electrode and a secondary battery which include the negative electrode active material described above.

**TECHNICAL SOLUTION**

According to an aspect of the present invention, there is provided a negative electrode active material including secondary particles wherein at least two primary particles are aggregated, wherein the primary particles include primary natural graphite particles and an amorphous carbon coating layer placed on at least a portion of a surface of the primary natural graphite particles, and the negative electrode active material has a pore volume of 0.06 mL/g to 0.15 mL/g as measured by a Hg porosimeter.

In addition, according to another aspect of the present invention, there is provided a method for preparing a negative electrode active material, which includes aggregating and performing a first spheroidization of at least two primary natural graphite particles, after performing the first spheroidization, forming an amorphous carbon coating layer on at least a portion of a surface of the primary natural graphite particles to form an intermediate structure, and performing a second spheroidization of the intermediate structure.

In addition, according to another aspect of the present invention, there is provided a negative electrode including a negative electrode current collector and a negative electrode active material layer disposed on at least one surface of the negative electrode current collector, wherein the negative electrode active material layer includes the negative electrode active material described above.

In addition, according to another aspect of the present invention, there is provided a secondary battery including the negative electrode described above, a positive electrode, a separator disposed between the negative electrode and the positive electrode, and an electrolyte.

**ADVANTAGEOUS EFFECTS**

A negative electrode active material includes secondary particles in which two or more primary particles are aggregated, the primary particles include primary natural graphite particles and an amorphous carbon coating layer placed on at least a portion of a surface of the primary natural graphite particles, and pore volume measured by a Hg porosimeter is regulated within a specific range. The negative electrode active material whose pore volume measured by a Hg porosimeter is regulated to the above range contains hard amorphous carbon therein to prevent the pores in a negative electrode from being clogged due to deformation of the negative electrode active material even by roll pressing, and may thus improve quick charging characteristics of the negative electrode, reduce degree of orientation of the negative electrode active material due to amorphous carbon to prevent swelling, and improve high temperature lifespan performance.

In addition, a method for preparing the above-described negative electrode active material of the present invention is characterized by aggregating and performing a first spheroidization of at least two primary natural graphite particles, and forming an amorphous carbon coating layer on the primary natural graphite particles and then performing the second spheroidization. Accordingly, amorphous carbon may be disposed in large pores formed between the primary natural graphite particles, amorphous carbon having good output characteristics may be disposed in a negative electrode active material layer to improve quick charging characteristics, degree of orientation of the negative electrode active material may be reduced due to amorphous carbon to prevent swelling, and high temperature lifespan performance may be improved.

Therefore, a negative electrode and a secondary battery which include the above-described negative electrode active material may have improved quick charging performance, minimized swelling, and improved high temperature lifespan performance.

**MODE FOR CARRYING OUT THE INVENTION**

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. The singular forms are intended to include the plural forms as well, unless the context clearly indicates otherwise.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

The term "average particle diameter ($D_{50}$)" as used herein may be defined as a particle diameter at a cumulative volume of 50% in a particle size distribution curve of particles. The average particle diameter ($D_{50}$), for example, may be measured by using a laser diffraction method. The laser diffraction method may generally measure a particle diameter ranging from a submicron level to a few mm and may obtain highly repeatable and high-resolution results.

As used herein, the term 'primary particle' refers to a single particle, that is, one single particle, and 'secondary particle' refers to an aggregate in which a plurality of primary particles are aggregated through an intentional assembly or bonding process.

Hereinafter, the present invention will be described in detail.

**Negative electrode active material**

The present invention relates to a negative electrode active material, and particularly, to a negative electrode active material for a lithium secondary battery.

To be specific, the negative electrode active material includes secondary particles in which two or more primary particles are aggregated, the primary particles include primary natural graphite particles and an amorphous carbon coating layer placed on at least a portion of a surface of the primary natural graphite particles, and the negative electrode active material has a pore volume of 0.06 mL/g to 0.15 mL/g as measured by a Hg porosimeter.

The negative electrode active material according to the present invention includes secondary particles in which two or more primary particles are aggregated, the primary particles include primary natural graphite particles and an amorphous carbon coating layer placed on at least a portion of a surface of the primary natural graphite particles, and pore volume measured by a Hg porosimeter is regulated within a specific range. The negative electrode active material whose pore volume measured by a Hg porosimeter is regulated to the above range contains hard amorphous carbon therein, and may thus prevent clogging of pores even when the negative electrode active material is roll pressed to improve quick charging, and for example, pores having a pore size of 100 nm or greater may be reduced to a desirable level to prevent swelling and improve high temperature life performance.

The negative electrode active material includes secondary particles in which two or more primary particles are aggregated. In this case, the primary particles include primary natural graphite particles and an amorphous carbon coating layer placed on at least a portion of a surface of the primary natural graphite particles.

Two or more of the primary natural graphite particles may be bonded to each other through an amorphous carbon coating layer or a precursor thereof (such as a pitch binder) placed on at least a portion of a surface and aggregated.

The primary natural graphite particles may be flaky natural graphite particles. The flaky natural graphite refers to natural graphite having a flaky particle shape, and may be obtained by grinding natural graphite having a flaky shape, a plate-like shape, a crushed shape, a tablet-like shape into a desired particle size.

The primary natural graphite particles may have an average particle diameter ($D_{50}$) of 10 um to 30 um, specifically 15 um to 20 um, and when the primary natural graphite particles have an average particle diameter ($D_{50}$) within the above range, it is desirable in terms of ease of spheroidization.

The negative electrode active material may further include pores formed on a surface, an inner portion, or a surface and an inner portion. The pores may be formed on a surface, an inner portion, or on a surface and an inner portion of the primary particles, or may be formed between two or more of the primary particles.

The amorphous carbon coating layer is placed on at least a portion of a surface of the primary natural graphite particles.

The amorphous carbon coating layer may support aggregation, assembly, or bonding of the primary natural graphite particles in the negative electrode active material. In addition, the amorphous carbon coating layer is harder than the primary natural graphite particles, and the amorphous carbon coating layer is placed in a space between the primary natural graphite particles, and may thus maintain the pores of the negative electrode active material even after roll pressing upon preparing a negative electrode to contribute to improving quick charging.

The amorphous carbon coating layer may be formed by aggregating and spheroidizing the primary natural graphite particles, specifically, performing aggregation and first spheroidization which will be described later, and then providing a carbon precursor to the aggregated primary natural graphite particles before heat-treating To be specific, the carbon precursor may be polymer resins such as sucrose, a phenol resin, a naphthalene resin, a polyvinyl alcohol resin, a furfuryl alcohol resin, a polyacrylonitrile resin, a polyamide resin, a furan resin, a cellulose resin, a styrene resin, a polyimide resin, an epoxy resin, a vinyl chloride resin, and polyvinyl chloride; pitches such as coal-based pitch, petroleum-based pitch, and mesophase pitch; and the like, but is not limited thereto. The heat-treating may be performed at a temperature of 1,000 °C to 1,800 °C.

In the negative electrode active material of the present invention, a weight ratio of the primary natural graphite particles to the amorphous carbon coating layer may be 75:25 to 99:1, specifically 85:15 to 92:8. When the weight ratio is in the above range, filling pores by the amorphous carbon coating layer and maintaining the shape of the negative electrode active material may be sufficiently achieved to improve quick charging performance, prevent swelling, and increase high temperature lifespan performance, and degradation of sphericity and uneven surfaces due to excessive formation of the amorphous carbon coating layer may be prevented.

The negative electrode active material has a pore volume of 0.06 mL/g to 0.15 mL/g as measured by a Hg porosimeter.

The Hg porosimeter is a measurement method designed to measure size, porosity, volume, and the like of pores present on a sample surface by adsorbing mercury to the sample. The Hg porosimeter is to adsorb mercury, not a gas, to a sample unlike a method of BET nitrogen adsorption, and the volume of large pores in the negative electrode active material, specifically, pores having a size of 100 nm to 1,000 nm may thus be measured. Meanwhile, the method of BET nitrogen adsorption is to adsorb nitrogen gas to a sample to measure the volume of pores, and the presence, specific surface area, volume, and the like of small pores, specifically pores having a size of 0.5 nm to 100 nm may thus be measured but there is a limit to measuring pores larger than 100 nm. In this respect, it is considered that parts that are measured for pores are different between the Hg porosimeter and the method of BET nitrogen adsorption.

The negative electrode active material of the present invention is a negative electrode active material in which primary particles include the primary natural graphite particles and the amorphous carbon coating layer described above, and being in the form of secondary particles in which the primary particles are aggregated, and regulates pore volume measured by a Hg porosimeter to the above-described level to reduce the ratio, content, or volume of pores having a large pore size, for example, a pore size of 100 nm or greater, in particles. When the pore volume measured by a Hg porosimeter is regulated to the above-described level, the amorphous carbon coating layer is placed between the primary natural graphite particles at a desirable level, and thus even when the negative electrode active material is roll pressed upon preparing a negative electrode, the shape thereof may be easily maintained to maintain pores so as to improve quick charging performance, and as the amorphous carbon coating layer having hard physical properties is placed, swelling is minimized and side reactions with an electrolyte are minimized to improve high temperature lifespan performance to an excellent level.

When the pore volume of the negative electrode active material, which is measured by a Hg porosimeter is less than 0.06 mL/g, it may be seen that internal pores are reduced, but the negative electrode active material is not well spheroidized to rather hardly secure pores between active materials in the negative electrode. When the pore volume of the negative electrode active material, which is measured by a Hg porosimeter is greater than 0.15 mL/g, it may not be considered that the amorphous carbon coating layer is sufficiently disposed between the primary natural graphite particles, and accordingly, degradation of quick charging performance, swelling, and deterioration of high temperature lifespan performance may be caused.

More specifically, the pore volume of the negative electrode active material, which is measured by a Hg porosimeter may be 0.08 mL/g to 0.12 mL/g, and when the pore volume is in the range, quick charging performance, swelling prevention, and high temperature lifespan performance may be further improved for the negative electrode active material.

The regulating of pore volume measured by a Hg porosimeter may be achieved by appropriately disposing an amorphous carbon coating layer between the primary natural graphite particles. For example, as will be described later, when a spheroidization process is performed twice after aggregation of primary natural graphite particles, by performing a process of forming an amorphous carbon coating layer on at least a portion of a surface of the primary natural graphite particles between a first spheroidization and a second spheroidization, the amorphous carbon coating layer is not concentrated on the outside of particles, but is disposed between the primary natural graphite particles, and pore volume measured by a Hg porosimeter may thus be regulated to a desired level. In addition, the regulating of pore volume measured by a Hg porosimeter may be achieved through a method of regulating the content of the amorphous carbon coating layer placed on at least a portion of the surface of the primary natural graphite particles, degree of spheroidization, and average particle diameter ($D_{50}$) of primary and secondary particles, and the like, but is not limited thereto.

In the present invention, a BET specific surface area of the negative electrode active material, which is measured by a method of BET nitrogen adsorption may be 0.9 m²/g to 3.0 m²/g, specifically, 1.1 m²/g to 1.8 m²/g. When BET specific surface area is in the above range, it is desirable in terms of preventing side reactions with an electrolyte. The pore volume may be measured by the method of BET nitrogen adsorption by using a BEL Sorption instrument (BEL Japan).

The negative electrode active material may be in the form of a sphere. In the case that the negative electrode active material has a spherical shape, when negative electrode active materials are included in a negative electrode, the negative electrode active material effectively maintain a pore structure, thereby securing a lithium ion diffusion path and improving output characteristics of the negative electrode. As used herein, the term "spherical" refers to a concept including a substantially spherical shape even when slightly distorted, in addition to a perfect spherical shape.

To be specific, the negative electrode active material may have a sphericity of 0.85 to 1, specifically 0.88 to 0.95. When the above range is satisfied, a pore structure in a negative electrode may be better maintained. The sphericity may be measured by digital image analysis by capturing a 2D image of 3D particles (e.g., using an instrument named as Morphologi4 (Malvern)).

The negative electrode active material may have an average particle diameter ($D_{50}$) of 10 um to 25 um, preferably 15 um to 20 um. When the average particle diameter ($D_{50}$) of negative electrode active material is in the above range, it is preferable in terms of improving both output characteristics and lifespan characteristics.

The negative electrode active material may further include an additional amorphous carbon coating layer placed on the secondary particles. The additional amorphous carbon coating layer may contribute to enhancing structural stability of the negative electrode active material, increasing particle strength, and preventing side reactions between the negative electrode active material and an electrolyte.

The negative electrode active material may include the additional amorphous carbon coating layer in an amount of 1 wt% to 15 wt%, preferably, 2 wt% to 5 wt%. In the presence of the additional amorphous carbon coating layer, excessive formation of a carbon coating layer rather deteriorates thermal stability due to an increase in electrolyte side reactions, and may degrade output characteristics, and thus forming a carbon coating layer in the above-described amount range is preferable.

The additional amorphous carbon coating layer may include amorphous carbon. Specifically, the additional amorphous carbon coating layer may be formed by heat treatment after providing a carbon precursor to the secondary particles. To be specific, the carbon precursor may be polymer resins such as sucrose, a phenol resin, a naphthalene resin, a polyvinyl alcohol resin, a furfuryl alcohol resin, a polyacrylonitrile resin, a polyamide resin, a furan resin, a cellulose resin, a styrene resin, a polyimide resin, an epoxy resin, a vinyl chloride resin, and polyvinyl chloride; pitches such as coal-based pitch, petroleum-based pitch, and mesophase pitch; and the like, but is not limited thereto. The heat-treating may be performed at a temperature of 1,000 °C to 1,800 °C.

When the negative electrode active material further includes an additional amorphous carbon coating layer, a weight ratio of the primary artificial graphite particles; to the amorphous carbon coating layer and the additional amorphous carbon coating layer; may be 75:25 to 98:2, specifically 85:15 to 92:8.

## Method for preparing negative electrode active material

In addition, the present invention provides a method for preparing a negative electrode active material. Specifically, the method for preparing the negative electrode active material may be the method of preparing a negative electrode active material described above.

Specifically, the method for preparing a negative electrode active material includes aggregating and performing a first spheroidization of at least two primary natural graphite particles, after the first spheroidization, forming an amorphous carbon coating layer on at least a portion of a surface of the primary natural graphite particles to form an intermediate structure, and performing a second spheroidization of the intermediate structure.

The method for preparing a negative electrode active material of the present invention is characterized in that in the process of aggregating and spheroidizing two or more primary natural graphite particles, spheroidization is performed twice, meanwhile an amorphous carbon coating layer is formed on at least a portion of a surface of the primary natural graphite particles between a first spheroidization and a second spheroidization. Through the above method, the amorphous carbon coating layer may be smoothly disposed on the surface of the primary natural graphite particles and between the primary natural graphite particles to fill pores having a large size between the primary natural graphite particles by the amorphous carbon coating layer. As the amorphous carbon coating layer has hard physical properties, even when the negative electrode active material is roll pressed upon preparing a negative electrode, the shape thereof is maintained well, and thus lithium ions may be effectively diffused, quick charging performance may be improved, swelling may be minimized, and side reactions with an electrolyte may be prevented to improve high temperature lifespan performance.

The method for preparing a negative electrode active material of the present invention includes aggregating and performing a first spheroidization of at least two primary natural graphite particles.

The primary natural graphite particles may be flaky natural graphite particles. The flaky natural graphite refers to natural graphite having a flaky particle shape, and may be obtained by grinding natural graphite having a flaky shape, a plate-like shape, a crushed shape, a tablet-like shape into a desired particle size.

In addition, the description of the primary natural graphite particles is the same as described above.

For the first spheroidization, any spheroidization method known in the art may be used without limitation. For example, the first spheroidization may be performed by applying mechanical treatment such as impact compression, friction, or shear force. The mechanical treatment may be performed by using a spheroidization device generally known in the art, and examples thereof may include pulverizers such as a counter jet mill (Hosokawa Micron, JP), an ACM pulverizer (Hosokawa Micron, JP), and a current jet (Nissin, JP), granulaters such as SARARA (Kawasaki Heavy Industries, Ltd, JP), GRANUREX (Freund Corporation, JP), Newgramachine (Seichin, JP), and AcroMaster (Hosokawa Micron, JP), kneaders such as a dispersion kneader and two-roll, compression cutting-type processors such as a mechano-micro system, an extruder, a ball mill, a planetary mill, a mechano-fusion system, Nobilta, hybridization, and a rotating ball mill.

Specifically, in the first spheroidization, the two or more primary natural graphite particles are put into a spheroidization device to which the above-described mechanical shear force is applied to form a coarse particle core, and are stacked in a concentric direction on a surface of the coarse particle core and aggregated to obtain spherical particles.

The method for preparing a negative electrode active material of the present invention includes, after the first spheroidization, forming an amorphous carbon coating layer on at least a portion of a surface of the primary natural graphite particles to form an intermediate structure.

After the first spheroidization, an amorphous carbon coating layer is formed on at least a portion of a surface of the primary natural graphite particles, and the amorphous carbon coating layer or amorphous carbon may thus be disposed between the primary natural graphite particles aggregated through the first spheroidization. In the present invention, after the fisrt spheroidization, the amorphous carbon coating layer is formed on the primary natural graphite particles, and the second spheroidization is performed to complete the spheroidization process, and the amorphous carbon coating layer may thus be smoothly disposed between the primary natural graphite particles. Accordingly, in the present invention, as the amorphous carbon coating layer may be disposed in large pores formed between the primary natural graphite particles, for example, pores having a size of 100 nm or greater, even when the negative electrode active material is roll pressed upon preparing a negative electrode, the shape thereof is maintained well, and thus lithium ions may be effectively diffused, quick charging performance may be improved, swelling may be minimized, and side reactions with an electrolyte may be prevented to improve high temperature lifespan performance.

When an amorphous carbon coating layer is formed after aggregation and spheroidization of primary natural graphite particles are completed, the amorphous carbon coating layer is concentrated on a surface of particles and is hardly disposed between the primary natural graphite particles, and accordingly, the pore volume measured by a Hg porosimeter described above may be hardly regulated to a desirable level, and quick charging performance, swelling prevention, and high temperature lifespan performance may be deteriorated. When an amorphous carbon coating layer is formed on primary natural graphite particles before performing a spheroidization process, and then the spheroidization process is performed, the primary natural graphite particles become hard and thus the spheroidization is not performed well to increase pores or swelling due to electrolyte side reactions, and the pore volume measured by a Hg porosimeter described above may be hardly regulated to a desirable level, and quick charging performance, swelling prevention, and high temperature lifespan performance may be deteriorated.

The forming of the amorphous carbon coating layer may be performed through a process of heat-treating after providing a carbon precursor to the aggregate of the primary natural graphite particles subjected to the first spheroidization. As a plurality of primary spheroidized and aggregated primary natural graphite particles have an open pore structure, a carbon precursor may be introduced and disposed between the primary natural graphite particles, and the carbon precursor may form an amorphous carbon coating layer through heat-treating.

To be specific, the carbon precursor may be polymer resins such as sucrose, a phenol resin, a naphthalene resin, a polyvinyl alcohol resin, a furfuryl alcohol resin, a polyacrylonitrile resin, a polyamide resin, a furan resin, a cellulose resin, a styrene resin, a polyimide resin, an epoxy resin, a vinyl chloride resin, and polyvinyl chloride; pitches such as coal-based pitch, petroleum-based pitch, and mesophase pitch; and the like, but is not limited thereto. The heat-treating may be performed at a temperature of 1,000 °C to 1,800 °C.

In addition, the description of an amorphous carbon coating layer is the same as described above.

The method for preparing a negative electrode active material of the present invention includes performing a second spheroidization of the intermediate structure. As the intermediate structure prepared above is secondary spheroidized, the spheroidization process may be completed, and sphericity may be increased while further reducing pores in the negative electrode active material through the second spheroidization process.

The second spheroidization may be performed in the same manner as the above-described first spheroidization.

The method for preparing a negative electrode active material of the present invention may further include heat-treating the secondary spheroidized intermediate structure. The heat-treating may be performed to reduce damage to the negative electrode active material generated in the spheroidization process and reduce a specific surface area of the negative electrode active material.

The heat-treating may be performed at 900 °C to 1,400 °C, specifically, 1,000 °C to 1,300 °C.

The method for preparing a negative electrode active material of the present invention may further include forming an additional amorphous carbon coating layer on the secondary spheroidized intermediate structure.

The additional amorphous carbon coating layer may be formed by heat treatment after providing a carbon precursor to the secondary spheroidized intermediate structure. To be specific, the carbon precursor may be polymer resins such as sucrose, a phenol resin, a naphthalene resin, a polyvinyl alcohol resin, a furfuryl alcohol resin, a polyacrylonitrile resin, a polyamide resin, a furan resin, a cellulose resin, a styrene resin, a polyimide resin, an epoxy resin, a vinyl chloride resin, and polyvinyl chloride; pitches such as coal-based pitch, petroleum-based pitch, and mesophase pitch; and the like, but is not limited thereto. The heat-treating may be performed at a temperature of 1,000 °C to 1,800 °C.

The method for preparing a negative electrode active material of the present invention may further include disintegrating the secondary spheroidized intermediate structure. The disintegrating may be understood as a process of comminuting, dispersing, and pulverizing the aggregates of the secondary spheroidized intermediate structure by applying a relatively weak force.

**Negative electrode**

In addition, the present invention provides a negative electrode, specifically, a negative electrode for a lithium secondary battery. The negative electrode may be a negative electrode including the negative electrode active material described above.

Specifically, the negative electrode includes a negative electrode current collector, and a negative electrode active material layer disposed on at least one surface of the negative electrode current collector, and the negative electrode active material layer includes the above-described negative electrode active material.

The negative electrode includes the above-described negative electrode active material, and may thus exhibit excellent quick charging performance, provide minimized swelling, and improve high temperature lifespan performance to an excellent level.

A negative current collector generally used in the art may be used without limitation as the negative electrode current collector, and, for example, the negative electrode current collector is not particularly limited so long as it has high conductivity without causing adverse chemical changes in the lithium secondary battery. For example, the negative electrode current collector may include at least one selected from copper, stainless steel, aluminum, nickel, titanium, fired carbon, and an aluminum-cadmium alloy, preferably, copper.

The negative electrode current collector may have fine surface roughness to improve bonding strength with the negative electrode active material, and the negative electrode current collector may be used in various shapes such as a film, a sheet, a foil, a net, a porous body, a foam body, a non-woven fabric body, and the like.

The negative electrode current collector generally may have a thickness of 3 um to 500 $\mu$m.

The negative electrode active material layer is disposed on at least one surface of the negative electrode current collector. Specifically, the negative electrode active material layer may be disposed on one surface or both surfaces of the negative electrode current collector.

The negative electrode active material layer includes the above-described negative electrode active material.

The negative electrode active material layer may include the negative electrode active material in an amount of 80 wt% to 99 wt%, preferably, 88 wt% to 98 wt%.

In addition, the description of a negative electrode active material is the same as described above.

The negative electrode active material layer may further include a binder, a conductive agent, and/or a thickener in addition to the above-described negative electrode active material.

The binder is a component that assists in the binding between the active material and/or the current collector, wherein the binder may commonly be included in an amount of 1 wt% to 30 wt%, for example, 1 wt% to 10 wt% in the negative electrode active material layer.

The binder may include at least one selected from the group consisting of polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber, and a fluorine rubber, preferably, at least one selected from polyvinylidene fluoride and a styrene-butadiene rubber.

Any thickener used in a conventional lithium secondary battery may be used as the thickener, and an example thereof is carboxymethyl cellulose (CMC).

The conductive agent is a component for further improving the conductivity of the negative electrode active material, wherein the conductive agent may be included in an amount of 1 wt% to 30 wt%, for example, 1 wt% to 10 wt% in the negative electrode active material layer.

Any conductive agent may be used without particular limitation so long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon powder; metal powder such as aluminum powder, and nickel powder; conductive whiskers such as zinc oxide whiskers and potassium titanate whiskers; conductive metal oxide such as titanium oxide; or polyphenylene derivatives, may be used. Specific examples of a commercial conductive agent may include acetylene black-based products (Chevron Chemical Company, Denka black (Denka Singapore Private Limited), or Gulf Oil Company), Ketjen black, EC-based products (Armak Company), Vulcan XC-72 (Cabot Company), and Super P (Timcal Graphite & Carbon).

The negative electrode may have an orientation index I(004)/I(110) of 10 to 25. The orientation index indicates the degree to which crystal structures inside a negative electrode are arranged in a certain direction, shows which direction crystals are oriented in the electrode, and may be measured by X-ray diffraction (XRD). More specifically, the orientation index is the area ratio ((004)/(110)) obtained by integrating peak intensity of plane (110) and plane (004) after measuring the plane (110) and the plane (004) of a negative electrode active material included in a negative electrode through XRD, and more specifically, XRD measurement conditions are as follows.

- Target: Cu (K$\alpha$ ray) graphite monochromator
- Slit: divergence slit = 1 degree, receiving slit=0.1 mm, scattering slit=1 degree
- Measurement area and step angle/measurement time:

    Plane (110): 76.5 degrees<2$\theta$<78.5 degrees, 0.01 degrees/3 seconds
    Plane (004): 53.5 degrees<2$\theta$<56.0 degrees, 0.01 degrees/3 seconds

In the above, 2$\theta$ represents a diffraction angle.

The XRD measurement is an example, and other measurement methods may also be used.

When the orientation index of the negative electrode is within the above range, quick charging performance of the negative electrode may be further improved. When the orientation index of the negative electrode is less than 10, it is not desirable in terms of initial efficiency degradation due to initial irreversible formation, and when the orientation index of the negative electrode is greater than 25, volume expansion upon charging and discharging may become greater to cause reduced lifespan.

The negative electrode active material layer may have a thickness of 10 um to 150 um, specifically 50 um to 100 $\mu$m, but is not limited thereto.

A negative electrode slurry is prepared by mixing the above-described negative electrode active material and at least one selected from the binder, the conductive agent, and the thickener in a solvent, and the negative electrode active material layer may be prepared by coating the negative electrode current collector with the negative electrode slurry, and roll pressing and drying the coated negative electrode current collector.

The solvent may include water or an organic solvent, such as N-methyl-2-pyrrolidone (NMP), and may be used in an amount such that desirable viscosity is obtained when the negative electrode active material as well as optionally the binder and the conductive agent are included. For example, the solvent may be included in an amount such that a concentration of a solid content including the negative electrode active material as well as optionally at least one selected from the binder, the thickener, and the conductive agent is in a range of 50 wt% to 95 wt%, for example, 70 wt% to 90 wt%.

**Secondary battery**

Furthermore, the present invention provides a secondary battery including the above-described negative electrode, more particularly, a lithium secondary battery.

The secondary battery may include the above-described negative electrode; a positive electrode, a separator disposed between the negative electrode and the positive electrode, and an electrolyte.

The positive electrode may face the negative electrode.

The positive electrode may include a positive electrode current collector; and a positive electrode active material layer disposed on the positive electrode current collector.

A positive current collector generally used in the art may be used without limitation as the positive electrode current collector, and, for example, the positive electrode current collector is not particularly limited so long as it has high conductivity without causing adverse chemical changes in the secondary battery. For example, the positive electrode current collector may include at least one selected from copper, stainless steel, aluminum, nickel, titanium, fired carbon, and an aluminum-cadmium alloy, preferably, aluminum.

The positive electrode current collector may have fine surface roughness to improve bonding strength with the positive electrode active material, and the positive electrode current collector may be used in various shapes such as a film, a sheet, a foil, a net, a porous body, a foam body, a non-woven fabric body, and the like.

The positive electrode current collector generally may have a thickness of 3 um to 500 $\mu$m.

The positive electrode active material layer may include a positive electrode active material.

The positive electrode active material is a compound capable of reversibly intercalating and deintercalating lithium, wherein the positive electrode active material may specifically include a lithium composite metal oxide including lithium and at least one metal such as cobalt, manganese, nickel, or aluminum. More specifically, the lithium composite metal oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-y}Mn_yO_2$ (where 0<Y<1), $LiMn_{2-z}Ni_zO_4$ (where 0<Z<2), etc.), lithium-nickel-cobalt-based oxide (e.g., $LiNi_{1-Y1}Co_{Y1}O_2$ (where 0<Y1<1), etc.), lithium-manganese-cobalt-based oxide (e.g., $LiCo_{1-Y2}Mn_{Y2}O_2$ (where 0<Y2<1), $LiMn_{2-z1}Co_{z1}O_4$ (where 0<Z1<2), etc.), lithium-nickel-manganese-cobalt-based oxide (e.g., $Li(Ni_pCo_qMn_{r1})O_2$ (where 0<p<1, 0<q<1, 0<r1<1, and p+q+r1=1) or $Li(Ni_{p1}Co_{q1}Mn_{r2})O_4$ (where 0<p1<2, 0<q1<2, 0<r2<2, and p1+q1+r2=2), etc.), or lithium-nickel-cobalt-transition metal (M) oxide (e.g., $Li(Ni_{p2}Co_{q2}Mn_{r3}M_{s2})O_2$ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein $0<p2<1$, $0<q2<1$, $0<r3<1$, $0<S2<1$, and $p2+q2+r3+S2=1$), etc.), and any one thereof or a mixture of two or more thereof may be included. Among these materials, in terms of the improvement of capacity characteristics and stability of the battery, the lithium composite metal oxide may include $LiCoO_2$, $LiMnO_2$, $LiNiO_2$, lithium nickel manganese cobalt oxide (e.g., $Li(Ni_{0.6}Mn_{0.2}Co_{0.2})O_2$, $Li(Ni_{0.5}Mn_{0.3}Co_{0.2})O_2$, or $Li(Ni_{0.8}Mn_{0.1}Co_{0.1})O_2$), or lithium nickel cobalt aluminum oxide (e.g., $Li(Ni_{0.8}Co_{0.15}Al_{0.05})O_2$, etc.), and, in consideration of a significant improvement due to the control of type and content ratio of elements constituting the lithium composite metal oxide, the lithium composite metal oxide may include $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, or $Li(Ni_{0.8}Mn_{0.1}Co_{0.1})O_2$, and any one thereof or a mixture of two or more thereof may be used.

The positive electrode active material may be included in an amount of 80 wt% to 99 wt% in the positive electrode active material layer.

The positive electrode active material layer may further include at least one selected from a binder and a conductive agent together with the positive electrode active material.

The binder is a component that assists in the binding between the active material and the conductive agent and in the binding with the current collector, wherein the binder is commonly added in an amount of 1 wt% to 30 wt% based on a total weight of a positive electrode material mixture. Examples of the binder may be at least one selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber, and a fluorine rubber.

The binder may be included in an amount of 1 wt% to 30 wt% in the positive electrode active material layer.

Any conductive agent, so long as having a conductivity without causing chemical changes in the battery, may be used without particular limitation, and may employ, for example, a conductive material, such as: graphite; carbon-based materials such as carbon black, acetylene black, Ketjen black, channel black, furnace black, lamp black, or thermal black; conductive fibers such as carbon fibers or metal fibers; carbon fluoride; metal powder such as aluminum powder, and nickel powder; conductive whiskers such as zinc oxide whiskers and potassium titanate whiskers; conductive metal oxide such as titanium oxide; or polyphenylene derivatives. Specific examples of a commercial conductive agent may include acetylene black-based products (Chevron Chemical Company, Denka black (Denka Singapore Private Limited), or Gulf Oil Company), Ketjen black, EC-based products (Armak Company), Vulcan XC-72 (Cabot Company), and Super P (Timcal Graphite & Carbon).

The conductive agent may be added in an amount of 1 wt% to 30 wt% in the positive electrode active material layer.

The separator separates the negative electrode and the positive electrode and provides a movement path of lithium ions, wherein any separator may be used as the separator without particular limitation as long as it is typically used in a secondary battery, and particularly, a separator having high moisture-retention ability for an electrolyte as well as low resistance to the transfer of electrolyte ions may be used. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of glass fiber having a high melting point, polyethylene terephthalate fiber, or the like may be used. Furthermore, a coated separator including a ceramic component or a polymer material may be used to secure heat resistance or mechanical strength, and may be selectively used in a singlelayered or a multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, a moltentype inorganic electrolyte, and the like, all of which may be used in the manufacturing of a lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 2.0 M. When the concentration of the lithium salt is in the above range, the electrolyte has suitable conductivity and viscosity, thereby exhibiting excellent performance, and lithium ions may effectively move.

As described above, since the lithium secondary battery according to the present invention stably exhibits excellent discharge capacity, quick charging characteristics, and capacity retention, the lithium secondary battery is suitable for portable devices, such as mobile phones, laptop computers, and digital cameras, and electric cars such as hybrid electric vehicles (HEVs) and particularly, may be preferably used as a constituent battery of a medium and large sized battery module. Thus, the present invention also provides a medium and large sized battery module including the above-described secondary battery as a unit cell.

The medium and large sized battery module may be preferably used in power sources that require high output and large capacity, such as an electric vehicle, a hybrid electric vehicle, and a power storage system.

Hereinafter, examples of the present invention will be described in detail in such a manner that it may easily be conducted by a person with ordinary skill in the art to which the present invention pertains. The invention may, however, be embodied in many different forms and should not be construed as being limited to the examples set forth herein.

## Example

Example 1: Preparation of negative electrode active material

(1) first spheroidization

Flaky primary natural graphite particles having an average particle diameter ($D_{50}$) of 20 um were prepared.

The primary natural graphite particles were spheroidized using a spheroidization device (a counter jet mill, manufactured by Hosokawa Micron) to aggregate and primary spheroidize the primary natural graphite particles.

(2) Forming of intermediate structure

A liquid pitch was provided as a carbon precursor to the plurality of primary spheroidized and aggregated primary natural graphite particles, and they were mixed (a weight ratio of primary natural graphite particles and carbon precursor = 90:10) and heat-treated at 1,300 °C for 12 hours to form an intermediate structure in which an amorphous carbon coating layer was formed on at least a portion of a surface of the primary natural graphite particles.

In this case, the weight ratio of the primary natural graphite particles and the amorphous carbon coating layer was 90:10.

(3) Second spheroidization

The intermediate structure was secondary spheroidized using a spheroidization device (a counter jet mill, manufactured by Hosokawa Micron).

(3) Forming of additional amorphous carbon coating layer

A liquid pitch was provided as a carbon precursor to the secondary spheroidized intermediate structure, and they were mixed and heat-treated at 1,300 °C for 12 hours to form an additional amorphous carbon coating layer on the intermediate structure. The resulting product was pulverized to obtain a negative electrode active material of Example 1.

An additional amorphous carbon coating layer of about 3.3 wt% was formed on the negative electrode active material.

In the negative electrode active material, a weight ratio of the primary natural graphite particles; to the amorphous carbon coating layer and the additional amorphous carbon coating layer; was 87:13.

The negative electrode active material had a pore volume of 0.09 mL/g as measured by a Hg porosimeter (a device used: Autopore V, manufactured by micromeritics), and had a BET specific surface area of 1.6 $m^2$/g as measured by a method of BET nitrogen adsorption, a sphericity of 0.91, and an average particle diameter ($D_{50}$) of 20 um (a device used: BEL Sorption, manufactured by BEL Japan).

Example 2: Preparation of negative electrode active material

A negative electrode active material was prepared in the same manner as in Example 1, except that ① in the forming of an intermediate structure, the weight ratio of the primary natural graphite particles and the carbon precursor was 98:2, the weight ratio of the primary natural graphite particles and the amorphous carbon coating layer was 98:2, ② the additional amorphous carbon coating layer was formed in about 3.06 wt% of the weight of the negative electrode active material, and (3) the weight ratio of the primary natural graphite particles; to the amorphous carbon coating layer and the additional amorphous carbon coating layer; was 95:5.

The negative electrode active material had a pore volume of 0.12 mL/g as measured by a Hg porosimeter, and had a BET specific surface area of 1.8 $m^2$/g as measured by a method of BET nitrogen adsorption, a sphericity of 0.94, and an average particle diameter ($D_{50}$) of 20 $\mu$m.

Example 3: Preparation of negative electrode active material

A negative electrode active material was prepared in the same manner as in Example 1, except that ① in the forming of an intermediate structure, the weight ratio of the primary natural graphite particles and the carbon precursor was 80:20, the weight ratio of the primary natural graphite particles and the amorphous carbon coating layer was 80:20, ② the additional amorphous carbon coating layer was formed in about 3.75 wt% of the weight of the negative electrode active material, and (3) the weight ratio of the primary natural graphite particles; to the amorphous carbon coating layer and the additional amorphous carbon coating layer; was 77:23.

The negative electrode active material had a pore volume of 0.07 mL/g as measured by a Hg porosimeter, and had a BET specific surface area of 1.1 $m^2$/g as measured by a method of BET nitrogen adsorption, a sphericity of 0.88, and an average particle diameter ($D_{50}$) of 20 $\mu$m.

Comparative Example 1: Preparation of negative electrode active material

(1) Spheroidization

The primary natural graphite particles were aggregated and spheroidized in the same manner as in the first spheroidization process of Example 1.

(2) Forming of amorphous carbon coating layer

A pitch was provided as a carbon precursor to the plurality of spheroidized primary natural graphite particles (a weight ratio of primary natural graphite particles and carbon precursor = 97:3) and they were heat-treated at 1,300 °C for 12 hours to form an amorphous carbon coating layer as a negative electrode active material of Comparative Example 1.

In this case, the weight ratio of the primary natural graphite particles to the amorphous carbon coating layer was 97:3.

The negative electrode active material had a pore volume of 0.27 mL/g as measured by a Hg porosimeter, and had a BET specific surface area of 2.6 $m^2$/g as measured by a method of BET nitrogen adsorption, a sphericity of 0.93, and an average particle diameter ($D_{50}$) of 20 $\mu$m.

Comparative Example 2: Preparation of negative electrode active material

(1) Forming of amorphous carbon coating layer

The same primary natural graphite particles and carbon precursor as those used in Example 1 were mixed in a weight ratio of 90:10, and then heat-treated at 1,300 °C for 12 hours to form an amorphous carbon coating layer on at least a portion of a surface of the primary natural graphite particles.

In this case, the weight ratio of the primary natural graphite particles to the amorphous carbon coating layer was 90:10.

(3) Spheroidization

The primary natural graphite particles having the amorphous carbon coating layer formed thereon were spheroidized using a spheroidization device (a counter jet mill, manufactured by Hosokawa Micron).

(3) Forming of additional amorphous carbon coating layer

A liquid pitch was provided as a carbon precursor to the plurality of spheroidized primary natural graphite particles, and they were mixed and heat-treated at 1,300 °C for 12 hours to form an additional amorphous carbon coating layer. The resulting product was pulverized to obtain a negative electrode active material of Comparative Example 2. That is, in Comparative Example 2, a negative electrode active material was prepared in the same manner as in Example 1, except that the first spheroidization was not performed.

An additional amorphous carbon coating layer of about 3.3 wt% was formed on the negative electrode active material.

In the negative electrode active material, a weight ratio of the primary natural graphite particles; to the amorphous carbon coating layer and the additional amorphous carbon coating layer; was 87:13.

The negative electrode active material had a pore volume of 0.67 mL/g as measured by a Hg porosimeter, and had a BET specific surface area of 2.3 $m^2$/g as measured by a method of BET nitrogen adsorption, a sphericity of 0.71, and an average particle diameter ($D_{50}$) of 20 $\mu$m.

Comparative Example 3: Preparation of negative electrode active material

(1) Spheroidization

The primary natural graphite particles were aggregated and spheroidized in the same manner as in the first spheroidization process of Example 1.

(2) Forming of amorphous carbon coating layer

A pitch was provided as a carbon precursor to the plurality of spheroidized primary natural graphite particles (a weight ratio of primary natural graphite particles and carbon precursor = 87:13) and they were heat-treated at 1,300 °C for 12 hours to form an amorphous carbon coating layer as a negative electrode active material of Comparative Example 1.

In this case, the weight ratio of the primary natural graphite particles to the amorphous carbon coating layer was 87:13.

The negative electrode active material had a pore volume of 0.26 mL/g as measured by a Hg porosimeter, and had a BET specific surface area of 1.7 $m^2$/g as measured by a method of BET nitrogen adsorption, a sphericity of 0.89, and an average particle diameter ($D_{50}$) of 20 $\mu$m.

Comparative Example 4: Preparation of negative electrode active material

A negative electrode active material was prepared in the same manner as in Example 1, except that ① in the forming of an intermediate structure, the weight ratio of the primary natural graphite particles and the carbon precursor was 75:25, the weight ratio of the primary natural graphite particles and the amorphous carbon coating layer was 75:25, ② the additional amorphous carbon coating layer was formed in about 4 wt% of the weight of the negative electrode active material, and ③ the weight ratio of the primary natural graphite particles; to the amorphous carbon coating layer and the additional amorphous carbon coating layer; was 72:28.

The negative electrode active material had a pore volume of 0.04 mL/g as measured by a Hg porosimeter, and had a BET specific surface area of 1.0 $m^2$/g as measured by a method of BET nitrogen adsorption, a sphericity of 0.79, and an average particle diameter ($D_{50}$) of 20 $\mu$m.

[Table 1]

| | Negative electrode active material | | | Negative electrode |
|---|---|---|---|---|
| | Sphericity | Pore volume (mL/g) measured by a Hg porosimeter | Specific surface area ($m^2/g$) measured by BET nitrogen adsorption method | Orientation index I(004)/I(110 ) |
| Example 1 | 0.91 | 0.09 | 1.6 | 16 |
| Example 2 | 0.94 | 0.12 | 1.8 | 19 |
| Example 3 | 0.88 | 0.07 | 1.1 | 13 |
| Comparative Example 1 | 0.93 | 0.27 | 2.6 | 37 |
| Comparative Example 2 | 0.71 | 0.67 | 2.3 | 29 |
| Comparative Example 3 | 0.89 | 0.26 | 1.7 | 32 |
| Comparative Example 4 | 0.79 | 0.04 | 1.0 | 12 |

The orientation index is the area ratio ((004)/(110)) obtained by integrating peak intensity of plane (110) and plane (004) after measuring the plane (110) and the plane (004) of a negative electrode active material included in a negative electrode through XRD, and more specifically, XRD measurement conditions are as follows.

- Target: Cu (K$\alpha$ ray) graphite monochromator
- Slit: divergence slit = 1 degree, receiving slit=0.1 mm, scattering slit=1 degree
- Measurement area and step angle/measurement time:

   Plane (110): 76.5 degrees<2$\theta$<78.5 degrees, 0.01 degrees/3 seconds
   Plane (004): 53.5 degrees<2$\theta$<56.0 degrees, 0.01 degrees/3 seconds

In the above, 2$\theta$ represents a diffraction angle.
Meanwhile, the sphericity was measured by digital image analysis (using an instrument of Morphologi4 from Malvern) by capturing a 2D image of the prepared negative electrode active materials.

**Experimental Example**

<Preparation of secondary battery>

The negative electrode active material of Example 1, Super C65 as a conductive agent, styrene-butadiene rubber as a binder, and carboxymethyl cellulose (CMC) as a thickener were mixed in a weight ratio of 96.5: 1.0: 1.3: 1.2, and water was added thereto to prepare a negative electrode slurry. The negative electrode slurry was applied onto a copper negative electrode current collector, vacuum dried at about 130 °C for 10 hours, and roll pressed to form a negative electrode active material layer, thereby preparing a negative electrode of Example 1. In this case, the negative electrode was prepared such that a loading of the negative electrode was 3.6 mAh/cm$^2$.
A lithium metal counter electrode was prepared as a positive electrode.
A polyolefin separator was interposed between the negative electrode and the positive electrode, and an electrolyte was injected to prepare a lithium secondary battery of Example 1. As the electrolyte, an electrolyte prepared by adding vinylene carbonate (VC) in an amount of 0.5 wt% with respect to a solvent to a non-aqueous electrolyte solvent in which ethylene carbonate (EC) and ethyl methyl carbonate (EMC) were mixed in a volume ratio of 2:8, and dissolving LiPF$_6$ in 1 M was used.
Lithium secondary batteries of Examples 2 and 3 and Comparative Examples 1 to 4 were prepared in the same manner as in Example 1, except that the negative electrode active materials of Examples 2 and 3 and Comparative Examples 1 to 4 were used instead of the negative electrode active material of Example 1.

**Experimental Example 1: Evaluation of quick charging performance**

Using the prepared lithium secondary batteries, the lithium secondary batteries were charged and discharged at 1 C for 3 cycles, and then charged at 3 C for 15 minutes to first differentiate the profile. In this case, inflection points shown in dQ/dV were determined to quantify lithium plating SOC (Li-Plating SOC, %), which is the SOC at the point when Li-plating takes place on a surface of a negative electrode. The results thereof are presented in Table 2 below.

**Experimental Example 2: High temperature lifespan performance evaluation**

The prepared lithium secondary batteries were charged at 1 C up to 4.2 V/38 mA under the condition of constant current/constant voltage (CC/CV) at 45 °C, and then discharged at 1 C up to 2.5 V under the condition of constant current (CC) to measure discharge capacity and this was repeated up to 200 cycles.
The capacity retention at 200th cycle was evaluated using Equation below. The results thereof are presented in Table 2 below.

Capacity retention (%) = {(discharge capacity at 200th cycle)/(discharge capacity at 1st cycle)} $\times$ 100

**Experimental Example 3: Swelling evaluation**

The lithium secondary batteries prepared above were charged and discharged in a charging range of SOC 0 to SOC 95, at 0.1 C in the first cycle, 0.2 C in the second cycle, and 0.5 C in the third cycle to the 50th cycle. Then, the swelling ratio was measured and calculated using Equation below. The results thereof are presented in Table 2 below.

$$\texttt{Swelling ratio(\%) = \{(t_2-t_1)/t_1\}×100}$$

($t_1$ indicates the thickness of a negative electrode for a secondary battery before performing the first charge/discharge cycle, and $t_2$ indicates the thickness of a negative electrode for a secondary battery after performing the 50th charge/discharge cycle)

[Table 2]

|  | Li-plating SOC(%) | Capacity retention (%, @45 °C, 200 cycle) | Swelling ratio (%) |
|---|---|---|---|
| Example 1 | 34 | 88 | 25 |
| Example 2 | 32 | 84 | 28 |
| Example 3 | 35 | 82 | 27 |
| Comparative Example 1 | 27 | 78 | 36 |
| Comparative Example 2 | 27 | 79 | 40 |
| Comparative Example 3 | 29 | 75 | 34 |
| Comparative Example 4 | 33 | 79 | 35 |

Referring to Table 2, it is determined that Examples 1 to 3, in which pore volume measured by a Hg porosimeter is preferably regulated, are superior in quick charging performance, cycle characteristics, and swelling prevention to Comparative Examples.

**Claims**

1. A negative electrode active material comprising secondary particles wherein at least two primary particles are aggregated,

   wherein the primary particles comprise primary natural graphite particles and an amorphous carbon coating layer placed on at least a portion of a surface of the primary natural graphite particles, and
wherein the negative electrode active material has a pore volume of 0.06 mL/g to 0.15 mL/g as measured by a Hg porosimeter.

2. The negative electrode active material of claim 1, wherein the negative electrode active material has a BET specific surface area ranging from 0.9 m$^2$/g to 3.0 m$^2$/g as measured by a method of BET nitrogen adsorption.

3. The negative electrode active material of claim 1, wherein the negative electrode active material has a spherical shape.

4. The negative electrode active material of claim 1, wherein a weight ratio of the primary natural graphite particles to the amorphous carbon coating layer ranges from 75:25 to 99:1.

5. The negative electrode active material of claim 1, further comprising an additional amorphous carbon coating layer placed on the secondary particles.

6. The negative electrode active material of claim 5, wherein the negative electrode active material comprises the additional amorphous carbon coating layer in an amount ranging from 1 wt% to 15 wt%.

7. The negative electrode active material of claim 1, wherein the negative electrode active material has an average particle diameter ($D_{50}$) ranging from 10 um to 30 um.

8. A method for preparing a negative electrode active material, the method comprising:

   aggregating and performing a first spheroidization of at least two primary natural graphite particles;
   after performing the first spheroidization, forming an amorphous carbon coating layer on at least a portion of a surface of the primary natural graphite particles to form an intermediate structure; and
   performing a second sphroidization of the intermediate structure.

9. The method of claim 8, wherein the primary natural graphite particles are flaky natural graphite particles.

10. The method of claim 8, further comprising disintegrating the secondary spheroidized intermediate structure.

11. The method of claim 8, further comprising heat-treating the secondary spheroidized intermediate structure.

12. The method of claim 8, further comprising forming an additional amorphous carbon coating layer on the secondary spheroidized intermediate structure.

13. A negative electrode comprising:

   a negative electrode current collector; and
   a negative electrode active material layer disposed on at least one surface of the negative electrode current collector,
   wherein the negative electrode active material layer comprises the negative electrode active material according to claim 1.

14. The negative electrode of claim 13, wherein the negative electrode has an orientation index I(004)/I(110) of 10 to 25.

15. A secondary battery comprising:

   the negative electrode according to claim 13;
   a positive electrode;
   a separator disposed between the negative electrode and the positive electrode; and
   an electrolyte.

## INTERNATIONAL SEARCH REPORT

| | International application No. |
|---|---|
| | **PCT/KR2022/013728** |

**A. CLASSIFICATION OF SUBJECT MATTER**

**H01M 4/36**(2006.01)i; **H01M 4/587**(2010.01)i; **H01M 4/62**(2006.01)i; **H01M 4/133**(2010.01)i; **C01B 32/21**(2017.01)i; **H01M 10/0525**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/36(2006.01); C01B 32/05(2017.01); C01B 32/182(2017.01); C01B 32/21(2017.01); H01M 10/052(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극(anode), 활물질(active material), 비정질 탄소(amorphous carbon), 코팅 (coating), 수은 포로시미트리(Hg porosimetry), 공극 부티(void volume), 구형화(spheroidal)

**C. DOCUMENTS CONSIDERED TO BE RELEVANT**

| Category* | Citation of document, with indication, where appropriate, of the relevant passages | Relevant to claim No. |
|---|---|---|
| X | KR 10-2017-0030580 A (MITSUBISHI CHEMICAL CORPORATION) 17 March 2017 (2017-03-17)<br>See claims 1, 4-5, 7-8, 12 and 14; and paragraphs [0059], [0320], [0557], [0596], [0599], [1116], [1153], [1159], [1385] and [1439]. | 1-4,7,13,15 |
| Y | | 5-6,8-12,14 |
| Y | KR 10-2020-0028637 A (SAMSUNG SDI CO., LTD.) 17 March 2020 (2020-03-17)<br>See claims 1 and 10. | 5-6,12 |
| Y | KR 10-2021-0115461 A (POSCO CHEMICAL CO., LTD.) 27 September 2021 (2021-09-27)<br>See claims 1, 4 and 9. | 8-12,14 |
| A | KR 10-2015-0046077 A (MITSUBISHI CHEMICAL CORPORATION) 29 April 2015 (2015-04-29)<br>See entire document. | 1-15 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 December 2022** | **21 December 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2022/013728** |

**C.    DOCUMENTS CONSIDERED TO BE RELEVANT**

| Category* | Citation of document, with indication, where appropriate, of the relevant passages | Relevant to claim No. |
|---|---|---|
| A | KR 10-2020-0090128 A (LG CHEM, LTD.) 28 July 2020 (2020-07-28)<br>    See entire document. | 1-15 |

Form PCT/ISA/210 (second sheet) (July 2022)

**INTERNATIONAL SEARCH REPORT**
Information on patent family members

| International application No. |
| --- |
| **PCT/KR2022/013728** |

| Patent document cited in search report | | | Publication date (day/month/year) | Patent family member(s) | | | Publication date (day/month/year) |
| --- | --- | --- | --- | --- | --- | --- | --- |
| KR | 10-2017-0030580 | A | 17 March 2017 | CN | 106663808 | A | 10 May 2017 |
| | | | | CN | 106663808 | B | 06 September 2019 |
| | | | | CN | 110078065 | A | 02 August 2019 |
| | | | | CN | 110078065 | B | 15 November 2022 |
| | | | | CN | 110451499 | A | 15 November 2019 |
| | | | | EP | 3168909 | A1 | 17 May 2017 |
| | | | | EP | 3168909 | B1 | 17 June 2020 |
| | | | | EP | 3731316 | A1 | 28 October 2020 |
| | | | | KR | 10-2022-0026610 | A | 04 March 2022 |
| | | | | KR | 10-2022-0076546 | A | 08 June 2022 |
| | | | | KR | 10-2022-0077161 | A | 08 June 2022 |
| | | | | KR | 10-2022-0078728 | A | 10 June 2022 |
| | | | | KR | 10-2022-0079703 | A | 13 June 2022 |
| | | | | KR | 10-2406753 | B1 | 08 June 2022 |
| | | | | KR | 10-2477729 | B1 | 14 December 2022 |
| | | | | US | 2017-0187041 | A1 | 29 June 2017 |
| | | | | US | 2022-0123308 | A1 | 21 April 2022 |
| | | | | US | 2022-0123309 | A1 | 21 April 2022 |
| | | | | US | 2022-0123310 | A1 | 21 April 2022 |
| | | | | US | 2022-0123311 | A1 | 21 April 2022 |
| | | | | WO | 2016-006617 | A1 | 14 January 2016 |
| KR | 10-2020-0028637 | A | 17 March 2020 | CN | 110885083 | A | 17 March 2020 |
| | | | | EP | 3621132 | A1 | 11 March 2020 |
| | | | | JP | 2020-043069 | A | 19 March 2020 |
| | | | | JP | 2021-193673 | A | 23 December 2021 |
| | | | | JP | 7094253 | B2 | 01 July 2022 |
| | | | | KR | 10-2323423 | B1 | 05 November 2021 |
| | | | | US | 11276859 | B2 | 15 March 2022 |
| | | | | US | 2020-0083536 | A1 | 12 March 2020 |
| KR | 10-2021-0115461 | A | 27 September 2021 | KR | 10-2413434 | B1 | 24 June 2022 |
| KR | 10-2015-0046077 | A | 29 April 2015 | CN | 104584286 | A | 29 April 2015 |
| | | | | CN | 104584286 | B | 03 May 2017 |
| | | | | EP | 2889937 | A1 | 01 July 2015 |
| | | | | EP | 2889937 | B1 | 03 October 2018 |
| | | | | JP | 2014-060148 | A | 03 April 2014 |
| | | | | JP | 2018-060805 | A | 12 April 2018 |
| | | | | JP | 2019-165020 | A | 26 September 2019 |
| | | | | JP | 6252034 | B2 | 27 December 2017 |
| | | | | JP | 7118926 | B2 | 16 August 2022 |
| | | | | KR | 10-2146718 | B1 | 21 August 2020 |
| | | | | US | 10720645 | B2 | 21 July 2020 |
| | | | | US | 2015-0243989 | A1 | 27 August 2015 |
| | | | | WO | 2014-030720 | A1 | 27 February 2014 |
| KR | 10-2020-0090128 | A | 28 July 2020 | CN | 113574702 | A | 29 October 2021 |
| | | | | EP | 3863090 | A1 | 11 August 2021 |
| | | | | EP | 3863090 | A4 | 23 February 2022 |
| | | | | US | 2021-0328220 | A1 | 21 October 2021 |
| | | | | WO | 2020-149683 | A1 | 23 July 2020 |

Form PCT/ISA/210 (patent family annex) (July 2022)

**EP 4 379 858 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210129159
- JP 4403327 B